# FASCICULE DE BREVET EUROPEEN

(11) **EP 4 003 827 B1**
(45) Date de publication et mention de la délivrance du brevet: **19.02.2025**
(21) Numéro de dépôt: 20746246.6
(22) Date de dépôt: 29.06.2020
(51) Int. Cl.: B62M 6/45, B62M 6/50, B60L 58/13

(54) **PROCÉDÉ D'ÉLABORATION D'UNE COMMANDE DE COUPLE FOURNIE PAR UN MOTEUR D'UN VÉHICULE À ASSISTANCE ÉLECTRIQUE**
VERFAHREN ZUR FORMULIERUNG EINES VON EINEM MOTOR EINES FAHRZEUGS MIT ELEKTRISCHEM HILFSANTRIEB GELIEFERTEN DREHMOMENTBEFEHLS
METHOD FOR FORMULATING A COMMAND OF TORQUE SUPPLIED BY A MOTOR OF AN ELECTRICALLY ASSISTED VEHICLE

(30) Priorité: 25.07.2019 FR 1908481
(43) Date de publication de la demande: 01.06.2022
(73) Titulaire: Bellatrix, 13880 Velaux (FR)
(72) Inventeur: LAFOURCADE, Pascal, 31500 Toulouse (FR); JOLY, Marc, 13007 Marseille (FR); PEEL, Thomas, 83330 Le Bausset (FR)
(74) Mandataire: IP Trust
(86) Numéro de dépôt international: PCT/FR2020/051130
(87) Numéro de publication internationale: WO 2021/014062

(56) Documents cités:
- EP-A1- 1 324 913
- EP-A1- 2 548 795
- EP-A1- 2 644 492
- EP-A1- 3 408 168
- WO-A1-2014/033388
- JP-A- 2001 199 378
- US-A1- 2004 206 563
- US-A1- 2018 319 457

## Description

### DOMAINE DE L'INVENTION

La présente invention concerne un procédé d'élaboration d'une commande du couple fourni par un moteur d'un véhicule à assistance électrique, tel qu'un vélo électrique. Elle concerne également un programme d'ordinateur mettant en oeuvre ce procédé d'élaboration de commande, et le véhicule à assistance électrique ainsi commandé.

### ARRIERE PLAN TECHNOLOGIQUE DE L'INVENTION

Les véhicules à assistance électrique sont conçus pour être mis en mouvement par les efforts fournis par leurs utilisateurs. Ces véhicules sont munis d'une batterie associée à un moteur électrique pour assister ces utilisateurs dans leurs efforts.

De manière conventionnelle, le moteur est commandé pour fournir un couple constant, c'est-à-dire appliquer un effort d'entraînement constant au véhicule. Alternativement, il peut être équipé d'un capteur mesurant l'effort fourni par l'utilisateur, par exemple un capteur mesurant sur le pédalier du vélo le couple de pédalage fourni par cet utilisateur, et le moteur comprend un dispositif de commande « en boucle ouverte » appliquant un gain fixe au couple fourni par l'utilisateur. On élabore dans ce cas une commande visant à fournir un couple complémentaire et proportionnel à celui fourni par l'utilisateur. Le gain appliqué est parfois sélectionnable par l'utilisateur, par exemple à l'aide d'un sélecteur disposé sur le guidon, pour être plus ou moins assisté.

Dans les deux cas mentionnés ci-dessus, l'assistance fournie par le moteur électrique ne prend aucunement en compte le confort de l'utilisateur lui permettant de gérer l'effort fourni sur toute l'étendue de son parcours et en tirant profit au maximum de l'énergie disponible dans la batterie.

Le document FR2938233 divulgue un vélo électrique équipé de capteurs permettant d'ajuster l'effort d'entraînement ou de freinage fourni par le moteur à l'effort fourni par l'utilisateur de sorte que celui-ci exerce un effort cible. Lorsque le dispositif de commande de vélo détermine que le niveau de charge de la batterie est insuffisant pour réaliser le parcours prévu, il est alors proposé à l'utilisateur de modifier ce parcours, de limiter l'assistance électrique, voire même d'interrompre cette assistance. Il apparaît donc que la gestion de l'énergie disponible de la batterie mise en oeuvre dans la solution proposée par ce document est très rudimentaire, l'énergie disponible étant puisée sans modulation aucune jusqu'à son épuisement.

Le document FR2976693 propose quant à lui de déterminer la quantité d'énergie nécessaire pour réaliser un trajet et répartir cette énergie, sur des tronçons successifs de ce trajet, entre une part fournie par le moteur électrique et une part complémentaire fournie par le cycliste. La solution proposée par ce document consiste donc en un travail préparatoire de planification de l'effort à fournir par le cycliste que celui-ci doit s'efforcer de suivre au cours de sa progression sur le parcours. Le document prévoit de manière optionnelle d'asservir le moteur électrique pour qu'il consomme précisément sur chaque portion de trajet l'énergie allouée. Mais cet asservissement (dont seul le principe est exposé dans ce document) reste centré sur la consommation électrique de la batterie et ne prend aucunement en compte l'effort effectivement fourni par le cycliste et donc son confort au cours du parcours.

Le document EP1324913Al divulgue un procédé d'élaboration d'une commande de couple fourni par un moteur d'un véhicule à assistance électrique, le moteur étant alimenté par une batterie, la commande étant élaborée par une unité de commande, reliée à un capteur de vitesse du véhicule et à un capteur d'un effort fourni par un utilisateur, le procédé comprenant les étapes suivantes: une étape de détermination d'une valeur de vitesse du véhicule et de l'effort fourni par l'utilisateur à partir de mesures fournies par le capteur de vitesse et par le capteur d'effort, et une étape de détermination de la commande de couple comprenant l'application d'un gain à l'effort, le gain présentant une valeur variable avec la mesure de la vitesse.

Autres documents pertinents sont US2018/319457Al, WO2014/033388A1, EP2548795 A1, JP2001199378 A, EP3408168Al, US 2004/206563Al et EP2644492A1.

### OBJET DE L'INVENTION

Un but de l'invention est de remédier au moins en partie aux inconvénients précités. Elle vise plus précisément à fournir un véhicule à assistance électrique prenant en compte le confort de l'utilisateur, lui permettant notamment de gérer l'effort fourni sur toute l'étendue de son parcours et tout en tirant profit, à tout moment, de l'énergie disponible dans la batterie

### BREVE DESCRIPTION DE L'INVENTION

En vue de la réalisation de ce but, l'objet de l'invention propose un procédé d'élaboration d'une commande de couple fourni par un moteur d'un véhicule à assistance électrique, le moteur étant alimenté par une batterie, la commande étant élaborée par une unité de commande pour compenser un surcroit d'effort fournit par un utilisateur au-delà d'un effort cible.

Le procédé comprend les étapes suivantes :
- une étape de détermination d'une valeur de vitesse du véhicule et du surcroit d'effort fourni par l'utilisateur correspondant à la portion de l'effort qui excède l'effort cible ;
- une étape de détermination de la commande de couple comprenant l'application d'un gain au surcroit d'effort, le gain présentant une valeur variable avec la mesure de la vitesse.

Selon d'autres caractéristiques avantageuses et non limitatives de l'invention, prises seules ou selon toute combinaison techniquement réalisable :
- le gain présente une valeur décroissante avec la vitesse ;
- le procédé comprend une étape d'ajustement de l'effort cible ;
- la valeur du gain présente une valeur constante sur une plage de vitesse s'étendant d'une vitesse nulle à une vitesse seuil, et une valeur strictement décroissante sur une plage s'étendant de la vitesse seuil à une vitesse de coupure, strictement supérieure à la vitesse seuil ;
- la valeur du gain présente une valeur linéairement décroissante sur la plage s'étendant de la vitesse seuil à une vitesse de coupure ;
- le procédé comprend une étape d'ajustement de la vitesse seuil ;
- le procédé comprend une étape de détermination d'un niveau d'énergie disponible de la batterie, et l'étape d'ajustement de la vitesse seuil comprend la détermination de la vitesse seuil selon le niveau de charge de la batterie ;
- l'étape d'ajustement de la vitesse seuil comprend la sélection par l'utilisateur d'une vitesse seuil dans une liste de vitesses seuil prédéterminées ;
- le procédé comprend :
   - une étape préliminaire d'entrée d'un point de départ et d'un point de destination d'un parcours ;
   - une étape de détermination d'un niveau d'énergie disponible de la batterie ;
   et dans lequel l'étape d'ajustement de la vitesse seuil comprend la détermination d'une vitesse seuil optimale correspondant à la vitesse seuil maximale permettant à l'utilisateur de réaliser le parcours sans épuiser la batterie ;
- l'étape préliminaire comprend la détermination du parcours sous la forme d'une séquence de segments contigus, chaque segment étant associé à une longueur de segment et à une pente de segment ;
- l'étape d'ajustement de la vitesse seuil comprend la répétition des sous-étapes suivantes :
   - affecter à chaque segment une quantité d'énergie de la batterie nécessaire à son parcours pour une vitesse seuil donnée ;
   - déterminer une quantité d'énergie nécessaire à la réalisation du parcours pour la vitesse seuil donnée ;
   - comparer la quantité d'énergie nécessaire à la réalisation du parcours au niveau d'énergie disponible de la batterie ;
   - modifier la vitesse seuil donnée selon le résultat de la comparaison ;
- la quantité d'énergie affectée à chaque segment est déterminée en faisant appel à une fonction de paramétrage du véhicule reliant l'énergie de batterie nécessaire pour parcourir une distance déterminée, pour une pente déterminée et pour une vitesse seuil déterminée.
- la fonction de paramétrage est établie ou ajustée à partir de données collectées auprès de l'utilisateur.

L'invention concerne aussi un programme d'ordinateur comprenant des instructions adaptées à la mise en oeuvre de chacune des étapes du procédé d'élaboration d'une commande de couple tel que décrit précédemment, lorsque le programme est exécuté au moins partiellement par l'unité de commande.

Enfin, l'invention concerne un véhicule à assistance électrique comprenant un moteur alimenté par une batterie, un capteur de vitesse du véhicule, un capteur d'un effort fourni par l'utilisateur, et une unité de commande exécutant un programme configuré pour compenser un surcroit d'effort fournit par un utilisateur, le programme déterminant une commande de couple du moteur par l'application d'un gain au surcroit d'effort, le surcroit d'effort étant l'effort mesuré par le capteur d'effort au-delà d'un effort cible, le gain présentant une valeur variable, possiblement décroissante, avec la mesure de la vitesse fournie par le capteur de vitesse.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
[Fig. 1b]
   Les figures 1a et 1b représentent schématiquement une bicyclette conforme à l'invention ;
[Fig. 2] La figure 2 représente une architecture d'une unité de commande ;
[Fig. 3] La figure 3 représente un schéma de principe d'un procédé conforme à l'invention ;
[Fig. 4] La figure 4 représente un exemple d'une loi d'évolution d'un gain d'un programme de régulation conforme à l'invention ;
[Fig. 5] La figure 5 représente un exemple d'une fonction de paramétrage.

### DESCRIPTION DETAILLEE DE L'INVENTION

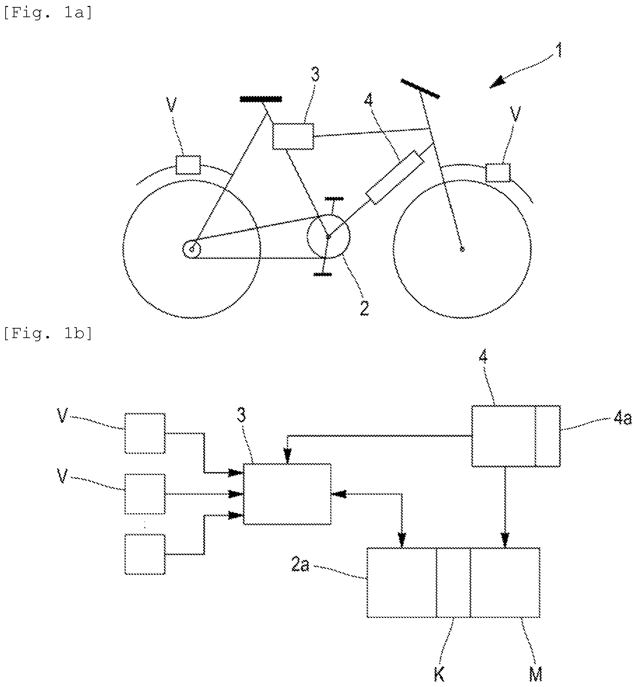

En référence aux figures 1a et 1b, on présente tout d'abord un véhicule à assistance électrique, ici une bicyclette 1, pouvant mettre en oeuvre un procédé conforme à l'invention.

La structure mécanique de cette bicyclette est bien connue en elle-même et ne sera donc pas détaillée ici. La bicyclette 1 est munie d'un bloc-moteur 2, comprenant un moteur électrique positionné dans l'exemple représenté sur le pédalier, mais qui aurait pu indifféremment être placé sur une roue avant ou arrière. Le bloc-moteur 2 comprend un contrôleur 2a pour élaborer une commande de couple du moteur électrique à partir d'un signal de commande fourni par une unité de commande 3 auquel le contrôleur 2a est électriquement relié. Ce contrôleur peut être configuré numériquement par l'unité de commande 3 pour mettre en oeuvre toute forme de loi de commande, par exemple de type PID. Il peut d'une manière générale appliquer un gain sur le signal de commande fourni par l'unité de commande 3, afin que le moteur M développe le couple commandé. Par « appliquer un gain », il peut s'agir d'effectuer le produit du gain avec la valeur du signal de commande (et mettre en oeuvre dans ce cas une commande proportionnelle) ou d'appliquer tout autre forme d'opération plus complexe, telle que la loi de commande PID précitée, linéaire ou non-linéaire.

Le bloc moteur 2 peut également comporter un capteur d'effort K, et le contrôleur 2a peut également fournir des signaux représentatifs de l'effort fourni par l'utilisateur. Il peut ainsi s'agir de la puissance et/ou du couple appliqué par cet utilisateur sur le pédalier à partir de capteurs qui peuvent être intégrés au bloc-moteur 2. Ces signaux de puissance et/ou de couple sont fournis à l'unité de commande 3 pour que cette information puisse y être traitée. Il peut alternativement ou en complément s'agir d'un capteur d'accélération et plus généralement de tout dispositif permettant d'évaluer le niveau d'effort de conduite du véhicule 1.

Pour permettre le fonctionnement du moteur électrique M, la bicyclette 1 est également munie d'un dispositif de stockage d'énergie ici sous la forme d'une batterie 4. Le dispositif de stockage peut être une batterie lithium-ion, lithium-polymère, une super capacité, ou de tout autre forme et sera désigné par le terme « batterie » dans la suite de cette demande pour plus de simplicité. La batterie 4 est électriquement reliée au bloc-moteur 2 et à l'unité de commande 3 pour leur fournir leur énergie de fonctionnement. La batterie 4 peut être munie de son propre contrôleur 4a, comme cela est très conventionnel, de manière à pouvoir fournir à l'unité de commande 3 son niveau de charge. Alternativement, ou en complément, ce niveau de charge peut être estimé par l'unité de commande 3 à partir des mesures de tension et de courant délivré par la batterie 4.

La bicyclette 1 est équipée d'au moins un capteur de vitesse V, électriquement relié à l'unité de commande 3. Toute forme de capteur peut convenir et il peut par exemple s'agir d'un interrupteur à lames souples disposé à proximité d'une des roues de la bicyclette. L'interrupteur est actionné par le passage d'un aimant porté par la roue. La fréquence du signal d'actionnement de l'interrupteur peut être décodée par l'unité de commande 3 pour déterminer la vitesse de rotation de la roue et donc la vitesse d'entraînement de la bicyclette 1. Dans l'exemple représenté, la bicyclette 1 porte deux capteurs de vitesse V respectivement disposés sur la roue avant et la roue arrière.

Bien entendu, toute autre forme de capteur de vitesse peut convenir, et la vitesse de la bicyclette peut d'une manière générale être déterminée à partir de toute information fournie par toute forme de capteur autre que celui qui vient d'être énuméré.

La bicyclette 1 peut comporter, de manière totalement optionnelle, au moins un sélecteur, actionnable par l'utilisateur, par exemple pour lui permettre de choisir le niveau d'assistance fournie par le moteur électrique. Le sélecteur peut être agencé sur le guidon et être électriquement relié à un des ports d'entrée-sortie E/S de l'unité de commande 3 pour que le choix de l'utilisateur puisse y être traité.

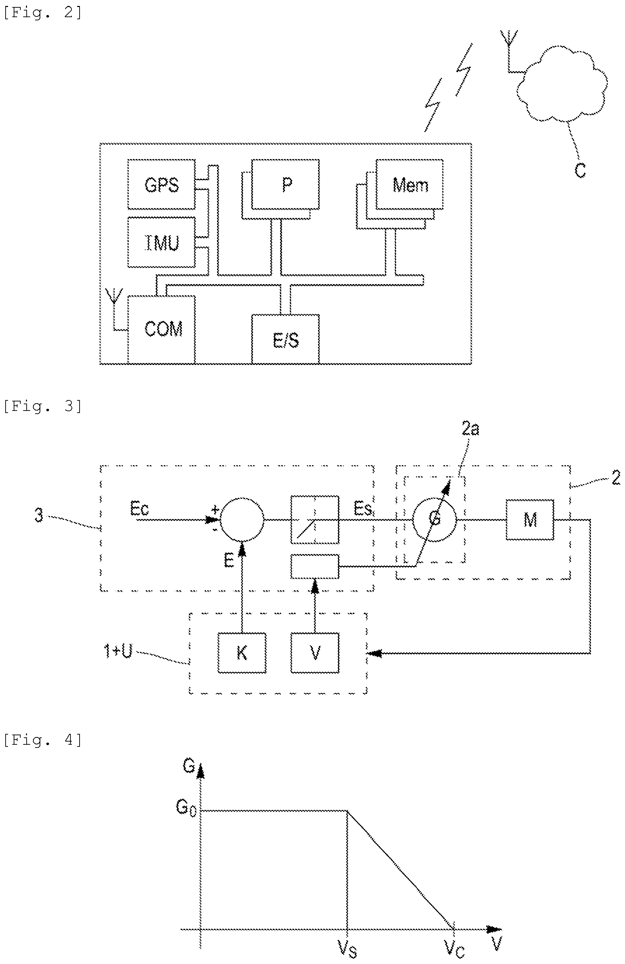

Enfin, la bicyclette 1 porte un boîtier électronique contenant l'unité de commande 3. Cette unité, représentée schématiquement sur la figure 2, peut prendre la forme d'une carte ou d'une pluralité de cartes électroniques comprenant de façon connue en soit au moins un processeur ou microcontrôleurs P permettant l'exécution de programmes informatiques enregistrée dans une mémoire MEM. Cette mémoire MEM peut-être également exploitée pour enregistrer l'ensemble des données fournies par les capteurs et l'ensemble des paramètres nécessaires à la mise en oeuvre du procédé conforme à l'invention.

L'unité de commande 3 est électriquement reliée aux différents éléments électroniques ou électriques portés par la bicyclette 1 par l'intermédiaire de ses ports d'entrée sortie E/S qui lui permettent de faire l'acquisition des signaux électriques fournis par ces éléments. L'unité de commande 3 peut également générer des signaux, sous le contrôle des différents programmes informatiques qu'elle exécute, visant par exemple à configurer le contrôleur 2a du bloc-moteur 2.

L'unité de commande 3 comprend (ou est reliée) à un dispositif de géolocalisation GPS, par exemple de type GPS ou plus généralement INSS, et à une centrale inertielle IMU. L'unité de commande 3 peut de la sorte déterminer la position de la bicyclette et son attitude, ce qui lui permet notamment de déterminer la pente du tronçon sur lequel la bicyclette circule, voire même sa vitesse en complément ou en remplacement des capteurs de vitesse déjà décrits.

L'unité de commande 3 peut être reliée à des moyens de calcul et/ou de stockage distant ou à d'autres types de dispositifs électroniques par l'intermédiaire d'une interface de communication COM. Cette interface peut mettre en oeuvre tous protocoles qui conviennent. Il pourra ainsi s'agir de relier l'unité de commande 3 par une liaison sans fil 4G, 5G, Wifi, NFC Bluetooth, etc.... Il pourra également s'agir de relier l'unité de commande 3 par l'intermédiaire d'une liaison filaire, par exemple au format USB. À titre d'exemple, la liaison Bluetooth peut permettre de relier l'unité de commande 3 à un capteur de fréquence cardiaque porté par l'utilisateur, afin de pouvoir communiquer ces données à l'unité pour qu'elle puisse les traiter. Un tel capteur peut former un capteur d'effort K, comme cela sera détaillé dans la suite de cette description.

L'unité de commande 3 est donc apte à collecter une grande quantité de données de manière régulière pour les stocker dans la mémoire interne MEM et/ou les téléverser vers un dispositif de calcul et de stockage distant C à l'aide de son interface de communication COM. On peut ainsi prévoir que toutes les mesures soient stockées dans la mémoire interne MEM au fur et à mesure de leurs acquisitions et qu'un programme s'exécutant sur le processeur engage le transfert de ces données de manière régulière (par exemple quotidienne) ou opportuniste (à la détection et à la connexion d'un réseau Wifi connu par exemple) au dispositif de calcul et de stockage distant C pour les mettre à disposition de l'utilisateur.

Similairement, l'interface de communication COM peut permettre à l'utilisateur de configurer ou paramétrer sa bicyclette, par exemple à l'aide de son smartphone directement en entrant en communication avec l'unité de commande 3 ou via un programme s'exécutant sur le dispositif distant C.

Afin de permettre la mise en oeuvre du procédé objet de l'invention dans une forme élaborée (et sans que cela ne forme ni une liste nécessaire ni une liste limitative), l'unité de commande 3 est configurée pour procéder de manière itérative (par exemple toutes les 100 ms ou toutes les secondes selon la nature de la grandeur mesurée) à la mesure ou la détermination des données suivantes :
- Niveau de charge de la batterie 4 ;
- Vitesse d'entraînement de la bicyclette 1;
- Inclinaison de la bicyclette permettant de déterminer la pente du parcours ;
- position (latitude, longitude, élévation) de la bicyclette 1 ;
- efforts fournis par l'utilisateur (puissance et/ou couple appliqué sur le pédalier, l'accélération de la bicyclette, ou encore la fréquence cardiaque de l'utilisateur).

D'une manière très générale, l'invention cherche à assister l'utilisateur de la bicyclette 1 pour que celui-ci déploie un effort modéré, appelé « cible » dans la suite de cette description, pendant toute la durée de son parcours, ou pour une durée la plus longue possible.

Par « effort de l'utilisateur », on désigne l'effort physique déployé qui peut se mesurer par toutes grandeurs mécaniques ou physiologie qui conviennent. Il peut ainsi s'agir comme on l'a déjà noté de la puissance ou du couple de pédalage tel que ceux-ci peuvent être mesurés par les capteurs V, K dont est munie la bicyclette 1. Il peut également s'agir de l'énergie dépensée en calories ou de la fréquence cardiaque de l'utilisateur, qui peuvent l'un et/ou l'autre être mesurées par un capteur porté par l'utilisateur et reportées sur l'unité de commande 3. L'effort cible forme un paramètre du procédé qui peut être enregistré dans la mémoire MEM de l'unité de commande. Comme cela sera détaillé dans la suite de cet exposé, cet effort cible ne présente pas nécessairement une valeur fixe.

Pour atteindre cet objectif, l'unité de commande 3 et le contrôleur du moteur 2a mettent en oeuvre un procédé d'élaboration d'une commande de couple du moteur visant à compenser un surcroit d'effort fourni par l'utilisateur. Le surcroit d'effort correspond très simplement à la portion de l'effort qui excède l'effort cible. Le surcroit est bien entendu nul si l'effort fourni par l'utilisateur est inférieur à l'effort cible.

Le procédé conforme à l'invention comprend les étapes suivantes:
- la détermination d'une valeur de la vitesse de la bicyclette 1, et de l'effort fourni par l'utilisateur à partir des mesures fournies par les différents capteurs V, K portés par la bicyclette 1 ou par l'utilisateur ;
- la détermination du surcroit d'effort par calcul de la différence entre l'effort cible et l'effort fourni par l'utilisateur pour n'en conserver que la partie négative.

Ces étapes peuvent être mises en oeuvre par un programme de commande de l'unité de commande 3 et le surcroit d'effort forme le signal de commande fourni au contrôleur 2a du moteur.
- la détermination de la commande de couple par application d'un gain au surcroit d'efforts transmis.

Cette étape peut être mise en oeuvre par un programme de régulation du contrôleur 2a qui applique ainsi la commande de couple au moteur électrique M. Celui-ci déploie le couple correspondant pour fournir l'effort d'entraînement au système formé de la bicyclette 1 de son utilisateur U, 1+U.

Comme cela est bien visible sur la figure 4, on forme de la sorte une régulation en boucle fermée du système 1+U, cherchant en permanence à écrêter ou effacer le surcroit d'efforts fourni par l'utilisateur, ce qui tend à assurer son confort. Si toutefois cet effort est inférieur à l'effort cible, il ne reçoit aucune assistance.

Selon l'invention, le gain G présente une valeur variable et le procédé comprend une étape (qui peut être mise en oeuvre par l'unité de commande 3) visant à déterminer la valeur de ce gain G selon la valeur déterminée de la vitesse de la bicyclette 1. Par « valeur variable » on désigne une évolution continue du gain G avec la vitesse, sans point singulier. Il ne s'agit donc pas d'un régulateur de l'état de la technique, configuré pour couper brutalement tout asservissement électrique lorsque la vitesse excède une valeur maximale et souvent réglementée de 25 km/h.

Selon un mode de mise en oeuvre préféré, la valeur variable du gain est décroissante avec la vitesse. Exprimée autrement, l'invention prévoit de réduire l'assistance apportée à l'utilisateur avec l'augmentation de la vitesse de la bicyclette. L'énergie évoluant fortement avec la vitesse, on préserve de la sorte le niveau d'énergie de la batterie ce qui permet d'assister l'utilisateur pendant un parcours étendu, avantageusement toute l'étendue de son parcours.

Pratiquement, la valeur du gain G peut être déterminée par le programme de commande s'exécutant sur l'unité de commande 3 à partir de la valeur de la vitesse déterminée et à l'aide d'une loi d'évolution formant un paramètre enregistré dans la mémoire MEM. La loi peut être enregistrée dans cette mémoire sous toute forme qui convient, par exemple sous la forme d'une table de valeurs, ou de coefficients d'une fonction générique. La valeur du gain G, lorsque celle-ci est calculée par le programme de commande, est communiquée au contrôleur 2a pour qu'il se configure en vue d'appliquer la commande de couple qui convient.

Cette succession d'étapes formant le coeur d'un procédé conforme à l'invention est reproduite itérativement, par exemple toutes les 100 ms, afin d'assurer la régulation du moteur M.

La loi d'évolution du gain G avec la vitesse peut prendre toute forme qui convient. Toutefois, et selon une approche avantageuse représentée sur la figure 4, le gain G forme un terme proportionnel de la commande et la loi d'évolution du gain G présente une valeur constante G0 sur une plage de vitesse s'étendant d'une vitesse nulle à une vitesse seuil Vs, puis une valeur strictement décroissante de la vitesse seuil Vs à une vitesse de coupure Vc (au-delà de laquelle le gain est nul, et l'assistance effectivement interrompue). Sur la plage constante, et jusqu'à la vitesse seuil Vs, l'utilisateur reçoit donc une assistance totale visant à effacer très dynamiquement le surcroit d'efforts qu'il fournit. Au-delà de la vitesse seuil Vs, l'assistance se réduit et s'interrompt totalement à partir de la vitesse de coupure Vc et au-delà. Cette loi est représentée sur la figure 4.

La décroissance du gain G entre la vitesse seuil Vs et la vitesse de coupure Vc peut suivre toute évolution. Pour des raisons de simplicité de mise en oeuvre, on pourra choisir une décroissance linéaire.

À titre d'illustration, on pourra prendre une vitesse de coupure Vc de 25 km/h, notamment lorsqu'un règlement impose de couper l'assistance électrique au-delà de cette vitesse, et la vitesse seuil Vs peut par exemple être fixée à 20 km/h.

L'effort cible ne présente pas nécessairement une valeur constante, mémorisée dans la mémoire MEM de l'unité de commande 3. Dans un mode de mise en oeuvre avantageux du procédé, cette valeur cible peut être choisie par l'utilisateur. Ce choix peut se faire à l'aide d'un sélecteur, par exemple positionné sur le guidon de la bicyclette, ou par l'intermédiaire du dispositif de calcul et de stockage distant. Dans une variante de ce mode de mise en oeuvre, l'effort cible présente une grandeur variable avec la valeur de vitesse de la bicyclette 1. À titre d'exemple, et dans le cas particulier où l'effort fourni par l'utilisateur est mesuré par le couple appliqué par celui-ci sur le pédalier, l'effort cible peut être choisi pour varier, par exemple linéairement, entre 15 Nm pour une vitesse nulle et 10 Nm à 25 km/h. Les traitements visant à ajuster la valeur de l'effort cible (par sélection de l'utilisateur ou par calcul) peuvent être mis en oeuvre au cours d'une étape d'ajustement du programme de commande qui s'exécute sur l'unité de commande 3.

Selon une caractéristique très avantageuse de l'invention, la vitesse seuil Vs est également un paramètre ajustable du procédé. Selon que cette vitesse seuil est ajustée à la hausse ou à la baisse, on peut très simplement mettre en oeuvre une régulation de l'assistance favorisant la vitesse ou la préservation de la batterie. Mais quel que soit le niveau choisi de la vitesse seuil Vs, cette régulation vise en permanence à écrêter le surcroit d'efforts fourni par l'utilisateur au-delà de l'effort cible.

Plusieurs modes de mise en oeuvre de cette caractéristique sont possibles qui dans tous les cas peuvent être implémentés par le programme de commande exécuté sur l'unité de commande 3, au cours d'une étape d'ajustement de la vitesse seuil Vs.

### Premier mode de mise en oeuvre

Ce premier mode de mis en oeuvre est particulièrement intéressant lorsque l'utilisateur souhaite réaliser un parcours libre, c'est-à-dire sans avoir préalablement communiqué à l'unité de commande 3 ou au dispositif de calcul et de stockage distant C un point de destination de son parcours. Dans ce mode de réalisation de parcours libre, il n'est pas donc possible de prendre en compte la distance ou la topologie du parcours pour gérer au juste nécessaire l'énergie disponible de la batterie 4.

On pourra toutefois, dans ce cas, exploiter un sélecteur dont est équipé à bicyclette 1 pour permettre à l'utilisateur de choisir entre un mode de fonctionnement « eco » et un mode de fonctionnement « sport » correspondant chacun à une valeur de vitesse seuil Vs prédéterminée et différentes l'une de l'autre. Le mode de fonctionnement « eco » est associé à une vitesse seuil Vs plus petite que le mode de fonctionnement « sport ». Plus généralement, une liste de vitesses seuils prédéterminées peut être enregistrée dans la mémoire MEM de l'unité de commande 3. Le procédé de l'invention peut alors prévoir une étape de sélection de la vitesse seuil Vs parmi les vitesses prédéterminées de la liste. Cette sélection est réalisée, dans le cadre de cet exemple, par l'utilisateur et par l'intermédiaire d'un sélecteur dédié de la bicyclette. Dans la pratique, et lorsque la vitesse de coupure Vc et de 25 km/h, le mode de fonctionnement « sport » peut correspondre à une vitesse de 20 km/h et le mode « eco » à une vitesse seuil de 10 km/h.

Dans une variante de ce mode de mise en oeuvre (qui peut se combiner à la sélection manuelle de la vitesse seuil qui vient d'être présentée), la vitesse seuil Vs est déterminée selon le niveau de charge de la batterie 4. Le procédé de l'invention prévoit dans ce cas une étape de détermination du niveau d'énergie disponible dans la batterie 4. L'étape d'ajustement peut comprendre la sélection d'une première vitesse seuil prédéterminée si le niveau d'énergie disponible de la batterie est inférieur à un seuil prédéterminé, et la sélection d'une deuxième vitesse seuil prédéterminée, supérieure à la première, si le niveau d'énergie disponible de la batterie est supérieur au seuil prédéterminé de niveau d'énergie de la batterie 4.

Plutôt qu'une sélection de la vitesse seuil dans une liste de valeurs prédéterminée, on peut plus généralement déterminer cette vitesse seuil Vs pour qu'elle soit rendue continûment variable ou constante par morceaux avec le niveau d'énergie disponible de la batterie 4.

### Deuxième mode de mise en oeuvre

Le deuxième mode de mise en oeuvre est rendu possible lorsque le parcours de l'utilisateur est connu ou, pour le moins, lorsque sa destination est établie. Cette destination a par exemple été saisie ou entrée par l'utilisateur, elle a pu être estimée en se fondant sur son historique de parcours ou encore fournie par un dispositif additionnel, comme par exemple son smartphone. Dans tous les cas, dans ce mode de réalisation, le procédé d'élaboration de la commande prévoit une étape préliminaire d'entrée d'un point de départ du parcours (qui peut être déterminé automatiquement à partir des mesures fournies par l'unité de localisation) et un point de destination. Cette étape préliminaire est préférentiellement mise en oeuvre par l'unité de commande 3 qui dispose de toutes les ressources nécessaires pour la mettre en oeuvre, et il n'est donc pas nécessaire d'être relié au dispositif de calcul et de stockage distant C pour cela.

A l'aide de ces informations, un programme de planification exécuté par le dispositif distant C, peut calculer ou élaborer un parcours sous la forme de séquences de segments. Ce calcul peut faire appel à une carte d'informations topographiques à laquelle le dispositif distant C peut accéder. Plus précisément, le parcours calculé peut être représenté numériquement sous la forme d'un graphe comportant une pluralité de noeuds reliés entre eux, chaque noeud du graphe correspondant à une extrémité d'un segment du parcours. Chaque segment peut être associé à une distance séparant les deux noeuds et à la pente moyenne ou au dénivelé moyen entre ces deux noeuds. Ces informations peuvent être extraites de la carte d'information topographique. Le calcul du parcours peut se réaliser par toute méthode connue, mettant en oeuvre souvent une technique d'optimisation combinatoire en vue de limiter la longueur du parcours, son dénivelé cumulé, ou un temps de parcours estimé.

Quelle que soit la forme sous laquelle le parcours calculé est numériquement représenté, l'étape d'ajustement de la vitesse seuil Vs comprend la détermination d'une vitesse seuil optimale correspondant à la vitesse seuil maximale permettant à l'utilisateur de réaliser le parcours sans épuiser la batterie. En d'autres termes, on détermine la vitesse seuil optimale à partir de laquelle l'assistance électrique est réduite, cette vitesse seuil optimale de régulation reste fixe pour l'ensemble du parcours et assure que l'assistance du moteur électrique est maintenue jusqu'au point de destination.

Pour permettre d'établir cette vitesse seuil optimale, le programme de planification fait appel à une fonction de paramétrage de la bicyclette reliant l'énergie de batterie nécessaire pour parcourir une distance déterminée, à une pente déterminée et à une vitesse seuil déterminée.

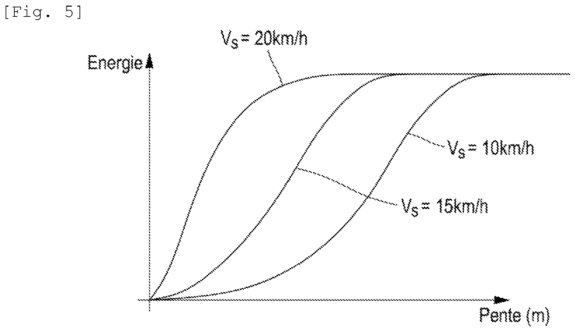

Une telle fonction de paramétrage peut être mémorisée dans le dispositif distant C. Elle peut se présenter sous toute forme numérique utile : sous la forme d'une table de valeur ou d'une fonction numérique par exemple. On a ainsi représenté graphiquement sur la figure 5 un exemple particulier, à titre d'illustration, d'une telle fonction qui d'une manière générale lie l'énergie de batterie à la pente sous la forme d'une fonction sigmoïde indexée par la vitesse seuil. Les paramètres de la sigmoïde peuvent être établis à partir de données collectées d'énergie de batterie consommée, de pente, et de vitesse seuil à partir d'un grand nombre d'utilisateurs afin de déterminer une fonction moyenne. Avantageusement, cette fonction peut être établie ou ajustée à partir des données collectées auprès de l'utilisateur lui-même afin que cette fonction reflète précisément son usage ou sa performance physique. Cette personnalisation peut être réalisée par un programme d'optimisation mise en oeuvre par le dispositif distant, à partir des données collectées par l'unité de commande 3 qui lui sont régulièrement téléversées. Cette fonction de paramétrage personnalisée peut être disponible uniquement après que l'utilisateur ait suffisamment utilisé sa bicyclette et, dans cette attente, une fonction de paramétrage générique peut être exploitée par le dispositif de calcul et de stockage distant C ainsi que par l'unité de commande 3.

Dans une alternative, la fonction de paramétrage générique peut être représentative d'un groupe d'utilisateurs, par exemple des utilisateurs localisés dans une région déterminée : en montagne, en plaine ou dans une ville déterminée.

Dans tous les cas, on dispose d'une fonction de paramétrage reliant le besoin en énergie de la batterie pour parcourir une distance déterminée selon une pente déterminée, l'assistance électrique étant régulée à l'aide d'une loi de commande conforme à l'invention et présentant une vitesse seuil déterminée.

La détermination de la vitesse seuil optimale d'un parcours préétabli fait appel à la fonction de paramétrage et forme un problème d'optimisation combinatoire simple à traiter.

Ainsi, l'étape d'ajustement de la vitesse seuil peut comprendre la répétition des sous-étapes suivantes :
- affecter à chaque segment une quantité d'énergie de la batterie nécessaire à son parcours pour une vitesse seuil donnée (en appliquant la fonction de paramétrage aux données de chaque segment du graphe);
- déterminer la quantité d'énergie de batterie nécessaire à la réalisation du parcours pour la vitesse seuil donnée (en additionnant les énergies affectées à chaque segment);
- comparer la quantité d'énergie de batterie nécessaire à la réalisation du parcours au niveau d'énergie disponible de la batterie ;
- modifier la vitesse seuil donnée selon le résultat de la comparaison.

Si la quantité d'énergie de batterie nécessaire à la réalisation du parcours est supérieure au niveau d'énergie disponible de la batterie, alors on modifie la vitesse seuil donnée à la baisse, avant de réitérer la séquence d'étapes. Dans le cas, contraire on modifier la vitesse seuil à la hausse.

Cette répétition peut être menée un nombre de fois prédéterminé ou pour satisfaire un critère de fin. Par exemple les sous-étapes peuvent être répétées jusqu'à ce que la vitesse seuil donnée dans la dernière itération conduise à consommer entre 80% et 90% du niveau d'énergie restante la batterie.

Si cette séquence ne converge pas, c'est-à-dire s'il est impossible de trouver une vitesse seuil permettant de réaliser le parcours dans son entier en préservant au moins en partie le niveau d'énergie de la batterie, on pourra alors choisir une vitesse seuil minimal préétablie (par exemple de 10 km/h) et avertir l'utilisateur qu'il est probable qu'il ne puisse se faire assister tout au long de son parcours.

Dans le cas contraire, on détermine dans une recherche de type dichotomique, une valeur de vitesse optimale. Lorsque les sous-étapes sont mise en oeuvre par l'unité de calcul et de stockage distant C, la valeur de la vitesse seuil optimale est communiquée à l'unité de commande 3 pour que celle-ci puisse configurer le programme de commande avec la vitesse seuil Vs déterminée. Une fois configurée de la sorte, l'unité de commande 3 et le contrôleur 2a du moteur mettent en oeuvre la régulation permettant de naturellement écrêter le surcroit d'efforts fournis par l'utilisateur en préservant un maximum d'énergie de la batterie. On assure de la sorte un confort maximum d'utilisation de la bicyclette 1.

Toute méthode d'optimisation mettant en oeuvre la répétition des sous-étapes précédentes peut convenir, telle qu'une méthode de gradient, une méthode d'optimisation stochastique du type recuit simulé, ou tout autre méthode numérique d'optimisation.

Bien entendu l'invention n'est pas limitée aux modes de mise en oeuvre décrits et on peut y apporter des variantes de réalisation sans sortir du cadre de l'invention tel que défini par les revendications.

Elle peut ainsi s'appliquer à tous types de véhicules profitant d'une assistance électrique visant à compléter des efforts fournis par l'utilisateur. Il peut par exemple s'agir d'une trottinette électrique.

Bien que l'on ait illustré dans l'exemple décrit la mise en oeuvre du procédé d'élaboration de la commande par une unité de commande assistée d'un contrôleur 2a du moteur, et éventuellement d'un dispositif de calcul et de stockage distant C, d'autres architectures informatiques sont possibles. On peut ainsi prévoir que l'ensemble des calculs soit exécuté par l'unité de commande 3, qui applique alors directement la commande de couple sur le moteur M.

Aussi, bien que préférentiellement le gain présentant une valeur variable décroissante avec la mesure de la vitesse, on peut envisager une loi de commande différente, présentant un gain pouvant évoluer au moins dans certains cas pour présenter une valeur croissante avec la vitesse, par exemple sous la forme de paliers, de manière à solliciter de manière active l'utilisateur.

## Revendications

1. Procédé d'élaboration d'une commande de couple fourni par un moteur (M) d'un véhicule à assistance électrique (1), le moteur (M) étant alimenté par une batterie (4), la commande étant élaborée par une unité de commande (3), reliée à un capteur de vitesse du véhicule (V) et à un capteur d'un effort (K) fourni par un utilisateur, pour compenser un surcroit d'effort fournit par un utilisateur au-delà d'un effort cible, le procédé comprenant les étapes suivantes :
- une étape de détermination d'une valeur de vitesse du véhicule et du surcroit d'effort fourni par l'utilisateur à partir de mesures fournies par le capteur de vitesse (V) et par le capteur d'effort (K), le surcroit d'effort correspondant à la portion de l'effort qui excède l'effort cible ;
- une étape de détermination de la commande de couple comprenant l'application d'un gain (G) au surcroit d'effort, le gain présentant une valeur variable avec la mesure de la vitesse.

2. Procédé d'élaboration selon la revendication précédente dans lequel le gain (G) présente une valeur décroissante avec la vitesse.

3. Procédé d'élaboration selon l'une des revendications précédentes comprenant une étape d'ajustement de l'effort cible.

4. Procédé d'élaboration selon l'une des revendications précédentes dans lequel la valeur du gain (G) présente une valeur constante sur une plage de vitesse s'étendant d'une vitesse nulle à une vitesse seuil (Vs), et une valeur strictement décroissante sur une plage s'étendant de la vitesse seuil (Vs) à une vitesse de coupure (Vc), strictement supérieure à la vitesse seuil (Vs).

5. Procédé d'élaboration selon la revendication précédente dans lequel la valeur du gain (G) présente une valeur linéairement décroissante sur la plage s'étendant de la vitesse seuil (Vs) à une vitesse de coupure (Vc).

6. Procédé d'élaboration selon l'une des deux revendications précédentes comprenant une étape d'ajustement de la vitesse seuil (Vs).

7. Procédé d'élaboration selon la revendication précédente comprenant une étape de détermination d'un niveau d'énergie disponible de la batterie (4), et l'étape d'ajustement de la vitesse seuil (Vs) comprend la détermination de la vitesse seuil (Vs) selon le niveau de charge de la batterie (4) .

8. Procédé d'élaboration selon l'une des deux revendications précédentes dans lequel l'étape d'ajustement de la vitesse seuil (Vs) comprend la sélection par l'utilisateur d'une vitesse seuil (Vs) dans une liste de vitesses seuil prédéterminées.

9. Procédé d'élaboration selon la revendication 5 comprenant :
- une étape préliminaire d'entrée d'un point de départ et d'un point de destination d'un parcours ;
- une étape de détermination d'un niveau d'énergie disponible de la batterie (4) ;
et dans lequel l'étape d'ajustement de la vitesse seuil (Vs) comprend la détermination d'une vitesse seuil optimale correspondant à la vitesse seuil maximale permettant à l'utilisateur de réaliser le parcours sans épuiser la batterie (4).

10. Procédé d'élaboration selon la revendication précédente dans lequel l'étape préliminaire comprend la détermination du parcours sous la forme d'une séquence de segments contigus, chaque segment étant associé à une longueur de segment et à une pente de segment.

11. Procédé d'élaboration selon la revendication précédente dans lequel l'étape d'ajustement de la vitesse seuil (Vs) comprend la répétition des sous-étapes suivantes :
- affecter à chaque segment une quantité d'énergie de la batterie nécessaire à son parcours pour une vitesse seuil donnée ;
- déterminer une quantité d'énergie nécessaire à la réalisation du parcours pour la vitesse seuil donnée ;
- comparer la quantité d'énergie nécessaire à la réalisation du parcours au niveau d'énergie disponible de la batterie (4);
- modifier la vitesse seuil donnée selon le résultat de la comparaison.

12. Procédé d'élaboration selon la revendication précédente dans lequel la quantité d'énergie affectée à chaque segment est déterminée en faisant appel à une fonction de paramétrage du véhicule reliant l'énergie de batterie nécessaire pour parcourir une distance déterminée, pour une pente déterminée et pour une vitesse seuil déterminée.

13. Procédé d'élaboration selon la revendication précédente dans lequel la fonction de paramétrage est établie ou ajustée à partir de données collectées auprès de l'utilisateur).

14. Programme d'ordinateur comprenant des instructions adaptées à la mise en œuvre de chacune des étapes du procédé d'élaboration d'une commande de couple selon l'une des revendications précédentes, lorsque le programme est exécuté au moins partiellement par l'unité de commande (2).

15. Véhicule à assistance électrique (1) comprenant un moteur (M) alimenté par une batterie (4), un capteur de vitesse du véhicule (V), un capteur d'un effort (K) fourni par l'utilisateur, et une unité de commande (3) exécutant un programme configuré pour compenser un surcroit d'effort fournit par un utilisateur, le programme déterminant une commande de couple du moteur (M) par l'application d'un gain au surcroit d'effort, le surcroit d'effort étant l'effort mesuré par le capteur d'effort au-delà d'un effort cible, le gain présentant une valeur variable avec la mesure de la vitesse fournie par le capteur de vitesse.

16. Véhicule à assistance électrique (1) selon la revendication précédente dans lequel le gain (G) présente une valeur décroissante avec la vitesse.

## Patentansprüche

1. Verfahren zur Entwicklung einer Drehmomentsteuerung, die von einem Motor (M) eines elektrisch unterstützten Fahrzeugs (1) bereitgestellt wird, wobei der Motor (M) von einer Batterie (4) gespeist wird und die Steuerung von einer Steuereinheit (3) generiert wird, die an einen Fahrzeuggeschwindigkeitssensor (V) und an einen von einem Benutzer bereitgestellten Kraftsensor (K) angeschlossenen ist, um eine zusätzliche Kraft zu kompensieren, die von einem Benutzer über ein Kraftziel hinaus bereitgestellt wird, wobei das Verfahren die folgenden Schritte umfasst:
- einen Schritt der Bestimmung eines Werts der Fahrzeuggeschwindigkeit und der vom Benutzer bereitgestellten zusätzlichen Kraft anhand von Messungen, die vom Geschwindigkeitssensor (V) und vom Kraftsensor (K) bereitgestellt werden, wobei die zusätzliche Kraft dem Teil der Kraft entspricht, der das Kraftziel übersteigt;
- einen Schritt der Bestimmung der Drehmomentsteuerung, der die Anwendung einer Verstärkung (G) auf die zusätzliche Kraft umfasst, wobei die Verstärkung einen variablen Wert mit der Geschwindigkeitsmessung aufweist.

2. Entwicklungsverfahren nach dem vorstehenden Anspruch, bei dem die Verstärkung (G) mit der Geschwindigkeit einen abnehmenden Wert aufweist.

3. Entwicklungsverfahren nach einem der vorstehenden Ansprüche, umfassend einen Schritt der Anpassung des Kraftziels.

4. Entwicklungsverfahren nach einem der vorstehenden Ansprüche, bei dem die Verstärkung (G) über einen Geschwindigkeitsbereich, der von der Geschwindigkeit Null bis zu einer Grenzgeschwindigkeit (Vs) reicht, einen konstanten Wert aufweist, und über einen Bereich, der von der Grenzgeschwindigkeit (Vs) bis einer Abschaltgeschwindigkeit (Vc), die strikt über der Grenzgeschwindigkeit (Vs) liegt, reicht, einen streng abnehmenden Wert aufweist.

5. Entwicklungsverfahren nach dem vorstehenden Anspruch, bei dem der Wert der Verstärkung (G) über den Bereich, der von der Grenzgeschwindigkeit (Vs) bis zu einer Abschaltgeschwindigkeit (Vc) reicht, einen linear abnehmenden Wert aufweist.

6. Entwicklungsverfahren nach einem der beiden vorstehenden Ansprüche, umfassend einen Schritt der Anpassung der Grenzgeschwindigkeit (Vs).

7. Entwicklungsverfahren nach dem vorstehenden Anspruch, umfassend einen Schritt der Bestimmung eines verfügbaren Energiepegels der Batterie (4), und wobei der Schritt der Anpassung der Grenzgeschwindigkeit (Vs) die Bestimmung der Grenzgeschwindigkeit (Vs) in Abhängigkeit vom Batterieladepegel (4) umfasst.

8. Entwicklungsverfahren nach einem der beiden vorstehenden Ansprüche, bei dem der Schritt der Anpassung der Grenzgeschwindigkeit (Vs) die Auswahl einer Grenzgeschwindigkeit (Vs) durch den Benutzer aus einer Liste vorgegebener Grenzgeschwindigkeiten umfasst.

9. Entwicklungsverfahren nach Anspruch 5, umfassend:
- einen vorbereitenden Schritt zur Eingabe eines Startpunkts und eines Zielpunkts einer Route;
- einen Schritt der Bestimmung eines verfügbaren Energiepegeles der Batterie (4);
und wobei der Schritt der Anpassung der Grenzgeschwindigkeit (Vs) die Bestimmung einer optimalen Grenzgeschwindigkeit umfasst, die der maximalen Grenzgeschwindigkeit entspricht und es dem Benutzer ermöglicht, die Fahrt durchzuführen, ohne die Batterie aufzubrauchen (4).

10. Entwicklungsverfahren nach dem vorstehenden Anspruch, bei dem der vorbereitende Schritt die Bestimmung der Route in Form einer Folge von zusammenhängenden Segmenten umfasst, wobei jedem Segment eine Segmentlänge und eine Segmentsteigung zugeordnet sind.

11. Entwicklungsverfahren nach dem vorstehenden Anspruch, bei dem der Schritt der Anpassung der Grenzgeschwindigkeit (Vs) die Wiederholung der folgenden Teilschritte umfasst:
- Zuweisen einer Batterieenergiemenge an jedes Segment, die für seine Route bei einer gegebenen Grenzgeschwindigkeit erforderlich ist;
- Bestimmen einer Energiemenge, die zur Durchführung der Route bei der gegebenen Grenzgeschwindigkeit erforderlich ist;
- Vergleichen der für die Durchführung der Route erforderlichen Energiemenge mit dem in der Batterie (4) verfügbaren Energiepegel;
- Ändern der gegebenen Grenzgeschwindigkeit gemäß dem Ergebnis des Vergleichs.

12. Entwicklungsverfahren nach dem vorstehenden Anspruch, bei dem die jedem Segment zugewiesene Energiemenge bestimmt wird, indem eine Fahrzeugparametrierfunktion herangezogen wird, welche die Batterieenergie in Beziehung setzt, die erforderlich ist, um eine bestimmte Strecke, eine bestimmte Steigung und eine bestimmte Grenzgeschwindigkeit zurückzulegen.

13. Entwicklungsverfahren nach dem vorstehenden Anspruch, bei dem die Parametrierfunktion anhand vom Benutzer gesammelter Daten erstellt oder angepasst wird.

14. Computerprogramm, umfassend Anweisungen, die an die Umsetzung jedes der Schritte des Verfahrens zur Entwicklung einer Drehmomentsteuerung nach einem der vorstehenden Ansprüche ausgelegt sind, wenn das Programm zumindest teilweise von der Steuereinheit (2) ausgeführt wird.

15. Elektrisch unterstütztes Fahrzeug (1), umfassend einen von einer Batterie (4) gespeisten Motor (M), einen Fahrzeuggeschwindigkeitssensor (V), einen Sensor für eine vom Benutzer bereitgestellte Kraft (K) und eine Steuereinheit (3), die ein Programm ausführt, das konfiguriert ist, um eine von einem Benutzer bereitgestellte zusätzliche Kraft zu kompensieren, wobei das Programm eine Drehmomentsteuerung des Motors (M) bestimmt, indem es eine Verstärkung auf die zusätzliche Kraft anwendet, wobei die zusätzliche Kraft die vom Kraftsensor über der Zielkraft hinaus gemessene Kraft ist, wobei die Verstärkung einen variablen Wert mit der vom Geschwindigkeitssensor bereitgestellten Geschwindigkeitsmessung aufweist.

16. Elektrisch unterstütztes Fahrzeug (1) nach dem vorstehenden Anspruch, bei dem die Verstärkung (G) einen mit der Geschwindigkeit abnehmenden Wert aufweist.

## Claims

1. A method of generating a torque command provided by a motor (M) of an electrically assisted vehicle (1), the motor (M) being powered by a battery (4), the command being generated by a control unit (3), connected to a speed sensor of the vehicle (V) and to a sensor for a force (K) provided by a user, in order to compensate for a surplus force provided by a user beyond a target force, the method comprising the following steps:
- a step for determining a vehicle speed value and a value of the surplus force provided by the user from measurements provided by the speed sensor (V) and the force sensor (K), the surplus force corresponding to the portion of the force that exceeds the target force;
- a step for determining the torque command comprising applying a gain (G) to the surplus force, the gain having a value that varies with the speed measurement.

2. The generating method according to the preceding claim, wherein the value of the gain (G) decreases with speed.

3. The generating method according to any one of the preceding claims, comprising a step of adjusting the target force.

4. The generating method according to any one of the preceding claims, wherein the value of the gain (G) has a constant value over a speed range extending from zero speed to a threshold speed (Vs), and a strictly decreasing value over a range extending from the threshold speed (Vs) to a cut-off speed (Vc), strictly greater than the threshold speed (Vs).

5. The generating method according to the preceding claim, wherein the value of the gain (G) has a linearly decreasing value over the range extending from the threshold speed (Vs) to a cut-off speed (Vc).

6. The generating method according to one of the two preceding claims, comprising a step of adjusting the threshold speed (Vs).

7. The generating method according to the preceding claim, comprising a step of determining an available energy level of the battery (4), and the step of adjusting the threshold speed (Vs) comprises determining the threshold speed (Vs) according to the charge level of the battery (4).

8. The generating method according to one of the two preceding claims, wherein the step of adjusting the threshold speed (Vs) comprises the user selecting a threshold speed (Vs) from a list of predetermined threshold speeds.

9. The generating method according to claim 5, comprising:
- a preliminary step of entering a starting point and a destination point of a route;
- a step for determining an available energy level of the battery (4);
and wherein the step of adjusting the threshold speed (Vs) comprises determining an optimum threshold speed corresponding to the maximum threshold speed enabling the user to complete the route without draining the battery (4).

10. The generating method according to the preceding claim, wherein the preliminary step comprises determining the route as a sequence of contiguous segments, each segment being associated with a segment length and a segment slope.

11. The generating method according to the preceding claim, wherein the step of adjusting the threshold speed (Vs) comprises repeating the following sub-steps:
- allocating each segment the amount of battery energy required to complete its route at a given threshold speed;
- determining the amount of energy required to complete the route at the given threshold speed;
- comparing the amount of energy required to complete the route with the level of energy available from the battery (4);
- modifying the given threshold speed according to the result of the comparison.

12. The generating method according to the preceding claim, wherein the amount of energy allocated to each segment is determined by calling up a vehicle parameterization function relating the battery energy required to cover a given distance, for a given gradient and for a given threshold speed.

13. The generating method according to the preceding claim, wherein the parameterization function is established or adjusted based on data collected from the user.

14. A computer program comprising instructions adapted to the implementation of each of the steps of the method for generating a torque command according to one of the preceding claims, when the program is executed at least partially by the control unit (2).

15. An electrically assisted vehicle (1) comprising a motor (M) powered by a battery (4), a vehicle speed sensor (V), a force sensor (K) for a force provided by the user, and a control unit (3) executing a program configured to compensate for an excess force provided by a user, the program determining a torque command of the motor (M) by applying a gain to the excess force, the excess force being the force measured by the force sensor above a target force, the gain having a value which varies with the speed measurement provided by the speed sensor.

16. The electrically assisted vehicle (1) according to the preceding claim, wherein the value of the gain (G) decreases with speed.
